(19) Europäisches Patentamt / European Patent Office / Office européen des brevets

(11) **EP 2 349 637 B1**

(12) **FASCICULE DE BREVET EUROPEEN**

(45) Date de publication et mention
de la délivrance du brevet:
**25.05.2016 Bulletin 2016/21**

(21) Numéro de dépôt: **09797095.8**

(22) Date de dépôt: **26.11.2009**

(51) Int Cl.:
***B23K 26/242*** *(2014.01)*      ***B23K 26/322*** *(2014.01)*
***B23K 26/244*** *(2014.01)*      *B23K 101/34* *(2006.01)*
*B23K 103/00* *(2006.01)*

(86) Numéro de dépôt international:
**PCT/FR2009/052307**

(87) Numéro de publication internationale:
**WO 2010/061138 (03.06.2010 Gazette 2010/22)**

(54) **PROCEDE DE FABRICATION D'UN CORPS CREUX EN TOLE ZINGUEE POUR UN VEHICULE AUTOMOBILE**

VERFAHREN ZUR HERSTELLUNG EINES HOHLKÖRPERS AUS ZINKPLATTIERTEM BLECH FÜR EIN KRAFTFAHRZEUG

METHOD FOR MANUFACTURING A HOLLOW BODY OF ZINC PLATED SHEET METAL FOR AN AUTOMOBILE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.11.2008 FR 0858046**

(43) Date de publication de la demande:
**03.08.2011 Bulletin 2011/31**

(73) Titulaire: **Renault S.A.S.**
**92100 Boulogne-Billancourt (FR)**

(72) Inventeurs:
• **PINON, Henri**
**F-92400 Courbevoie (FR)**
• **DIGUET, Arnaud**
**F-78310 Maurepas (FR)**
• **SAINT-MARTIN, Jean-Christophe**
**F-78000 VERSAILLES (FR)**

(56) Documents cités:
**EP-A- 1 005 944      US-A- 4 682 002**

## Description

L'invention concerne un procédé de fabrication d'un corps creux en tôle zinguée pour un véhicule automobile.

L'invention concerne plus particulièrement un procédé de fabrication d'un corps creux en tôle zinguée pour un véhicule automobile, ledit corps creux comportant au moins un premier panneau de tôle assemblé à un second panneau de tôle, ledit premier panneau de tôle comportant au moins une partie principale perpendiculaire au second panneau, une partie d'extrémité parallèle au second panneau et un rayon de courbure déterminé reliant ladite partie d'extrémité à la partie principale, ledit procédé comportant au moins une étape de soudage par laser au cours de laquelle le premier panneau est soudé par laser au second panneau en respectant un jeu déterminé entre lesdits premier et second panneaux, pour permettre l'évacuation des vapeurs de zinc.

On connaît de nombreux exemples de procédés de fabrication de ce type.

L'assemblage de panneaux de tôle zinguée est habituellement réalisé par soudure laser par transparence.

La soudure à clin et la soudure dans le rayon, c'est-à-dire une soudure réalisée par un faisceau de laser positionné entre le rayon de courbure du premier panneau et le second panneau, sont difficiles à mettre en oeuvre, car les importantes dispersions de réalisation des panneaux issus d'emboutissage ne permettent que difficilement d'assurer un suivi satisfaisant de la position du faisceau laser.

Le document EP1005944 divulgue un procédé de soudage par faisceau laser pour des joints par recouvrement de tôles revêtues, en particulier de tôles d'acier zinguées, avec un espace de dégazage prévu pour le matériau de revêtement s'évaporant dans la zone de soudage, les deux tôles à souder ensembles reposant l'une sur l'autre de l'un des côtés du joint par recouvrement et sont, de l'autre côté du joint par recouvrement, en raison d'un rayon prévu dans la tôle supérieure, légèrement écartées l'une de l'autre de façon à y former entre elles l'espace de dégazage. Le faisceau de laser du procédé divulgué arrivant perpendiculairement aux deux tôles reposant l'une sur l'autre, ne permet pas à l'une des tôles formant un premier panneau de comporter une partie perpendiculaire à un deuxième panneau formé par la deuxième tôle car la partie perpendiculaire nuirait à une focalisation correcte du faisceau de laser.

La soudure par transparence donne d'excellents résultats en terme de tenue de l'assemblage réalisé, mais impose des contraintes élevées dans le cadre du soudage de pièces zinguées.

En effet, il est nécessaire, lors du soudage, de maintenir l'existence d'un jeu déterminé d'environ 0.2 mm entre les deux panneaux pour permettre aux vapeurs de zinc de s'échapper latéralement du cordon de soudure et ainsi de moins perturber l'écoulement capillaire de la soudure.

Aussi est il particulièrement difficile de réaliser cette opération entre une partie d'extrémité du premier panneau, parallèle au second panneau, et ledit second panneau, car les tolérances d'emboutissage sont supérieures au jeu de 0.2 mm recherché.

L'invention remédie à cet inconvénient en assemblant sans jeu la partie d'extrémité du premier panneau et le second panneau, et en réalisant l'opération de soudage par transparence dans le rayon de courbure du premier panneau, pour réaliser le soudage selon le jeu déterminé.

Dans ce but, l'invention propose un procédé du type décrit précédemment, caractérisé en ce qu'il comporte au moins une étape préalable de mise en position au cours de laquelle on superpose sans jeu la partie d'extrémité du premier panneau sur le second panneau et en ce qu'au cours de l'étape de soudage par laser, le faisceau laser est positionné dans une zone du rayon de courbure du premier panneau correspondant au jeu déterminé entre les premier et second panneaux, une tête laser délivrant le faisceau laser étant agencée d'un côté des deux panneaux pour réaliser un soudage dit "par transparence".

Selon d'autres caractéristiques du procédé :

- au cours de l'étape de soudage laser, la tête laser est agencée du côté de la concavité du rayon de courbure et est inclinée d'un angle déterminé selon lequel le faisceau passe par le centre du rayon de courbure et la normale au rayon de courbure du premier panneau,

- au cours de l'étape de soudage laser, le faisceau laser est agencé à une distance déterminée de la jonction entre le rayon de courbure du premier panneau et le second panneau, qui est associée à la réalisation de la soudure dans une zone du rayon de courbure du premier panneau correspondant au jeu déterminé entre les premier et second panneaux,

- le procédé comporte une étape de suivi de joint simultanée à l'étape de soudage laser, au cours de laquelle on mesure en permanence la position du cordon de soudure,

- le procédé comporte une étape de correction de position de la tête laser au cours de laquelle, en fonction de la position du cordon de soudure mesurée lors de l'étape de suivi de joint, on asservit la position de la tête laser pour ajuster la distance déterminée de manière à permettre la réalisation de la soudure dans la zone du rayon de courbure du premier panneau correspondant au jeu déterminé entre les premier et second panneaux.

D'autres caractéristiques et avantages de l'invention apparaîtront à la lecture de la description détaillée qui suit pour la compréhension de laquelle on se reportera aux dessins annexés dans lesquels :

- la figure 1 est une vue schématique en coupe d'une extrémité d'un corps creux, illustrant les procédés de soudage conventionnels.
- la figure 2 est une vue schématique en coupe d'une extrémité d'un corps creux, illustrant le procédé de soudage objet de l'invention.
- la figure 3 est une vue schématique en coupe d'une extrémité d'un corps creux, selon la figure 2, illustrant un exemple de principe de recalage associé au procédé de soudage objet de l'invention.

Dans la description qui va suivre, des chiffres de référence identiques désignent des pièces identiques ou ayant des fonctions similaires.

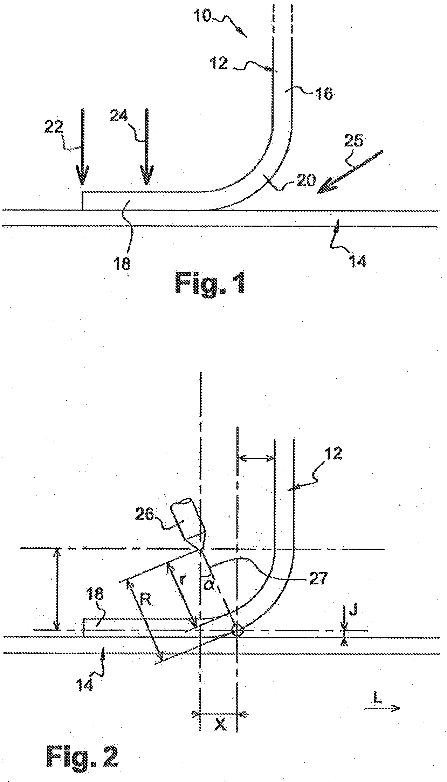

On a représenté à la figure 1 le détail d'un corps creux 10 de véhicule automobile.

De manière connue, le corps creux 10 comporte au moins un premier panneau 12 de tôle assemblé à un second panneau 14 de tôle.

Par exemple, le premier panneau 12 de tôle comporte au moins une partie principale 16 perpendiculaire au second panneau 14, une partie d'extrémité 18 parallèle au second panneau 14 et un rayon de courbure 20 déterminé reliant ladite partie d'extrémité 18 à la partie principale 16.

De manière connue, plusieurs procédés peuvent être utilisés pour souder le premier panneau 12 au second panneau 14.

Dans le suite de la présente description, on s'intéressera en particulier à l'opération de soudage de panneaux 12, 14 en tôle zinguée, qui nécessitent le maintien d'un jeu déterminé entre les panneaux à souder, pour permettre l'évacuation des vapeurs de zinc dégagées par l'échauffement des panneaux, l'évaluation de ces vapeurs étant impérative pour éviter qu'elles ne viennent perturber l'écoulement capillaire de la soudure.

Comme on peut le voir sur la figure 1, il est en premier lieu possible de réaliser la soudure "à clin" dans une zone de bout 22 du premier panneau 12. Toutefois, ce type de soudure ne confère par la meilleure rigidité à l'assemblage.

Il est aussi possible de réaliser la soudure "par transparence" dans une zone intermédiaire 24 de la partie d'extrémité 18 du premier panneau 12, une tête laser délivrant le faisceau laser étant agencée d'un côté des deux panneaux 12, 14.

Dans cette configuration, il est nécessaire, lors du soudage, de maintenir l'existence d'un jeu déterminé (non représenté) d'environ 0.2 mm entre les deux panneaux 12, 14 pour permettre aux vapeurs de zinc de s'échapper latéralement du cordon de soudure.

Il est donc particulièrement difficile de réaliser cette opération entre la partie intermédiaire 24 du premier panneau 12 et le second panneau 14, car les tolérances d'emboutissage des deux panneaux 12, 14 sont supérieures au jeu de 0.2 mm recherché.

Enfin, il est possible de souder dans une zone 25 à proximité du rayon de courbure 20 du premier panneau 12, mais il est nécessaire d'effectuer un positionnement précis du faisceau laser pour parvenir à la réalisation d'un cordon de soudure entre le rayon de courbure 20 du premier panneau 12 et le second panneau 14.

L'invention se propose de tirer parti des jeux exploitables entre le rayon de courbure 20 du premier panneau 12 et le second panneau 14 pour réaliser une opération de soudage par transparence.

Dans ce but, l'invention propose un procédé de soudage des panneaux 12, 14 décrits précédemment, ledit procédé comportant au moins une étape de soudage par laser au cours de laquelle le premier panneau est soudé par laser au second panneau en respectant un jeu déterminé entre lesdits premier 12 et second panneaux 14, pour permettre l'évacuation des vapeurs de zinc.

Conformément à l'invention, comme représenté à la figure 2, ce procédé comporte au moins une étape préalable de mise en position au cours de laquelle on superpose sans jeu la partie d'extrémité 18 du premier panneau 12 sur le second panneau 14. Par ailleurs, au cours de l'étape de soudage par laser, le faisceau laser 27 est positionné dans une zone du rayon de courbure 20 du premier panneau 12 correspondant à un jeu "J" déterminé, typiquement de l'ordre de 0.2mm, entre les premier et second panneaux 12, 14.

Cette configuration permet donc d'une part de s'affranchir des dispersions dimensionnelles résultant de l'emboutissage des premier et seconds panneaux 12, 14 et néanmoins d'assurer le respect du jeu "J" nécessaire à l'évacuation des vapeurs de zinc.

Enfin, le procédé selon l'invention est avantageusement caractérisé en ce qu'une tête laser 26 délivrant le faisceau laser est agencée d'un côté des deux panneaux 12, 14 pour réaliser un soudage dit "par transparence".

Plus particulièrement, la tête laser 26 est de préférence agencée du côté de la concavité du rayon de courbure.

Cette configuration a été représentée à la figure 2.

L'invention est en ceci avantageuse que la position de la tête laser 26 suivant la direction horizontale "L" détermine le jeu entre le rayon de courbure 20 du premier panneau et le second panneau 14 avec lequel la soudure est réalisée.

Il est donc possible en faisant varier la position longitudinale "X" de la tête laser 26 mesurée à partir de la jonction entre le rayon de courbure 20 du premier panneau 12 et le second panneau 14, de faire varier le jeu "J", et réciproquement, c'est-à-dire d'ajuster la position longitudinale "X" de la tête laser 26 afin d'obtenir un jeu "J" correspondant idéalement à une valeur de 0.2mm.

Une simple relation géométrique permet de calculer la position théorique de la tête laser 26.

En effet, comme l'illustre la figure 2, pour obtenir un jeu "J" sur le rayon extérieur "R" du rayon de courbure 20 à partir d'une position "X" de la tête laser 26, nous obtenons les relations suivantes :

$$\cos \alpha = (R-J)/R \text{ et } \sin \alpha = X/R$$

d'où :

$$X = R \sin [\arccos ((R-J)/R)]$$

Ce calcul est évidemment à minorer ou majorer en fonction des dispersions de dimensionnement obtenues pour les tôles considérées.

Ainsi, à titre d'exemple, pour une tôle standard d'épaisseur 1.5mm, la rayon de courbure intérieur "r" variant entre 3mm et 6mm, ce qui correspond à un rayon extérieur "R" variant entre 4,5 et 6mm, on obtient pour un valeur de jeu "J" comprise entre 0,17 mm et 0,23 mm, une valeur théorique de positionnement "X" de la tête laser comprise entre 1,33 et 1,72mm.

Une autre caractéristique avantageuse de l'invention est que, de préférence, le procédé comporte une étape de suivi de joint simultanée à l'étape de soudage laser, au cours de laquelle on mesure en permanence la position du cordon de soudure.

Cette mesure peut également être réalisée pour lire la valeur des rayons réalisés et de ce fait recalculer les positions idéales de soudure. Cette mesure est, de préférence, optique.

De la sorte, le procédé peut avantageusement comporter une étape de correction de position de la tête laser 26 au cours de laquelle, en fonction de la position du cordon de soudure mesurée lors de l'étape de suivi de joint, on asservit la position de la tête laser 26 pour ajuster la distance déterminée de manière à permettre la réalisation de la soudure dans la zone du rayon de courbure 20 du premier panneau 12 correspondant au jeu déterminé "J" entre les premier et second panneaux 12, 14.

A titre d'exemple, l'étape de correction ci-dessus peut être réalisée au moyen d'un système de recalage, comportant, par exemple, une caméra de vision, une table de guidage associée à la tête laser et une unité de commande reliée à la table de guidage et gérée par différents algorithmes de vision.

Notamment, un premier exemple d'algorithme utilisé peut être basé sur le principe de suivi d'une surface plane. Le principe de cet algorithme consiste à détecter la fin de la surface plane, laquelle est construite par interpolation linéaire à partir de la gauche ou de la droite (paramètre à rentrer dans l'algorithme). Le point de suivi est alors défini lorsque la distance entre les points de la pièce et la droite de suivi excède une valeur à rentrer dans le logiciel.

Un autre exemple d'algorithme utilisé est basé sur le principe de recalage à partir de la détection des deux bords de la tôle, à savoir détection de la partie rayonnée 20, puis déduction du centre.

Un autre exemple d'algorithme peut être utilisé, dans le cas ou la partie d'extrémité 18 du premier panneau 12 forme une marche, comme représenté sur la figure 2, sur le principe de la prise en compte de cette marche lors du recalage. L'algorithme détecte la marche et utilise le même principe que décrit précédemment, à savoir le principe de suivi d'une surface plane.

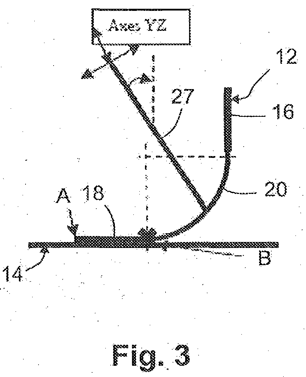

Encore un autre exemple d'algorithme utilisé peut être basé sur la combinaison des différents principes décrits ci-dessus, à savoir la prise en compte d'une marche au niveau de la partie d'extrémité du premier panneau 12 et l'utilisation d'un bord sur l'autre côté. Ce dernier exemple est illustré très schématiquement sur la figure 3. L'algorithme prend donc en compte la détection de la marche au point A de la figure 3 et détermine le point de suivi caiculé à partir du rayon au point B de la figure 3. Ce recalage permet donc d'ajuster de façon optimale la position de la tête laser 26, et donc du faisceau laser 27 (représenté schématiquement par un trait plein sur la figure 3), selon les axes Y et Z.

L'invention permet donc de réaliser de manière simple et efficace l'assemblage de panneaux creux en tôle zinguée par soudage laser par transparence dans le rayon de courbure d'un panneau.

**Revendications**

1. Procédé de fabrication d'un corps creux (10) en tôle zinguée pour un véhicule automobile, ledit corps creux comportant au moins un premier panneau (12) de tôle assemblé à un second panneau (14) de tôle, ledit premier panneau (12) de tôle comportant au moins une partie principale (16) perpendiculaire au second panneau (14), une partie d'extrémité (18) parallèle au second panneau (14) et un rayon de courbure (20) déterminé reliant ladite partie d'extrémité (18) à la partie principale (16), ledit procédé comportant au moins :

   - une étape préalable de mise en position au cours de laquelle on superpose sans jeu la partie d'extrémité (18) du premier panneau (12) sur le second panneau (14) ; et
   - une étape de soudage par laser au cours de laquelle le premier panneau (12) est soudé par laser au second panneau (14) en respectant un jeu déterminé (J) entre lesdits premier et second panneaux (12, 14), pour permettre l'évacuation des vapeurs de zinc, le faisceau laser étant positionné dans une zone du rayon de courbure (20) du premier panneau (12) correspondant au jeu (J) déterminé entre les premier et second panneaux (12, 14), une tête laser (26) délivrant le faisceau laser (27) étant agencée d'un côté des deux panneaux (12, 14) pour réaliser un soudage dit "par transparence", **caractérisé en**

**ce qu'**au cours de l'étape de soudage laser, la tête laser (26) est agencée du côté de la concavité du rayon (20) de courbure et est inclinée d'un angle (α) déterminé selon lequel le faisceau passe par le centre du rayon de courbure et la normale au rayon de courbure (20) du premier panneau (12).

2.  Procédé de fabrication selon la revendication précédente, **caractérisé en ce qu'**au cours de l'étape de soudage laser, le faisceau laser (27) est agencé à une distance (X) déterminée de la jonction entre le rayon de courbure (20) du premier panneau (12) et le second panneau (14), qui est associée à la réalisation de la soudure dans une zone du rayon (20) de courbure du premier panneau (12) correspondant au jeu (J) déterminé entre les premier et second panneaux (12, 14).

3.  Procédé de fabrication selon la revendication précédente, **caractérisé en ce qu'**il comporte une étape de suivi de joint simultanée à l'étape de soudage laser, au cours de laquelle on mesure en permanence la position du cordon de soudure.

4.  Procédé de fabrication selon la revendication précédente, **caractérisé en ce qu'**il comporte une étape de correction de position de la tête laser (26) au cours de laquelle, en fonction de la position du cordon de soudure mesurée lors de l'étape de suivi de joint, on asservit la position de la tête laser (26) pour ajuster la distance (X) déterminée de manière à permettre la réalisation de la soudure dans la zone du rayon de courbure (20) du premier panneau (12) correspondant au jeu déterminé entre les premier et second panneaux (12, 14).

**Patentansprüche**

1.  Verfahren zur Herstellung eines Hohlkörpers (10) aus zinkplattiertem Blech für ein Kraftfahrzeug, wobei der Hohlkörper mindestens ein erstes Paneel (12) aus Blech aufweist, das an ein zweites Paneel (14) aus Blech montiert ist, wobei das erste Paneel (12) aus Blech mindestens einen Hauptteil (16), der senkrecht zu dem zweiten Paneel (14) ist, einen Endteil (18), der parallel zu dem zweiten Paneel (14) ist, und einen bestimmten Krümmungsradius (20) aufweist, der den Endteil (18) mit dem Hauptteil (16) verbindet, wobei das Verfahren mindestens Folgendes aufweist:

    - einen vorausgehenden Schritt des Positionierens, bei dem der Endteil (18) des ersten Paneels (12) auf das zweite Paneel (14) überlagert wird; und
    - einen Schritt des Laserschweißens, bei dem das erste Paneel (12) mit dem zweiten Paneel (14) unter Einhaltung eines bestimmten Abstands (J) zwischen dem ersten und dem zweiten Paneel (12, 14) laserverschweißt wird, um das Abführen der Zinkdämpfe zu ermöglichen, wobei der Laserstrahl in einem Bereich des Krümmungsradius (20) des ersten Paneels (12), der dem bestimmten Spiel (J) zwischen dem ersten und zweiten Paneel (12, 14) entspricht, angeordnet wird, wobei ein Laserkopf (26), der den Laserstrahl (27) abgibt, auf einer Seite der zwei Platten (12, 14) angeordnet wird, um eine sogenannte "transparente" Schweißnaht zu erstellen, **dadurch gekennzeichnet, dass** bei dem Schritt des Laserschweißens der Laserkopf (26) auf der Seite der Konkavität des Krümmungsradius (20) angeordnet wird und um einen bestimmten Winkel (α) geneigt wird, wonach der Strahl durch den Mittelpunkt des Krümmungsradius und die Normale zu dem Krümmungsradius (20) des ersten Paneels (12) durchgeht.

2.  Verfahren zur Herstellung nach dem vorhergehenden Anspruch, **dadurch gekennzeichnet, dass** der Laserstrahl (27) bei dem Schritt des Laserschweißens in einem bestimmten Abstand (X) von der Verbindung zwischen dem Krümmungsradius (20) des ersten Paneels (12) und dem zweiten Paneel (14) angeordnet wird, der mit der Ausführung der Schweißnaht in einem Bereich des Krümmungsradius (20) des ersten Paneels (12) verbunden ist, der dem bestimmten Spiel (J) zwischen dem ersten und dem zweiten Paneel (12, 14) entspricht.

3.  Verfahren zur Herstellung nach dem vorhergehenden Anspruch, **dadurch gekennzeichnet, dass** es einen Schritt der Nahtverfolgung aufweist, der gleichzeitig mit dem Schritt des Laserschweißens ausgeführt wird, bei dem ständig die Position der Schweißnaht gemessen wird.

4.  Verfahren zur Herstellung nach dem vorhergehenden Anspruch, **dadurch gekennzeichnet, dass** es einen Schritt des Korrigierens der Position des Laserkopfes (26) aufweist, bei dem in Abhängigkeit von der Position der Schweißnaht, die bei dem Schritt der Nahtverfolgung gemessen wird, die Position des Laserkopfes (26) geregelt wird, um den bestimmten Abstand (X) derart anzupassen, um die Ausführung der Schweißnaht in dem Bereich des Krümmungsradius (20) des ersten Paneels (12) zu ermöglichen, der dem bestimmten Spiel zwischen dem ersten und dem zweiten Paneel (12, 14) entspricht.

**Claims**

1. Method for manufacturing a hollow body (10) of zinc plated sheet metal for an automobile, said hollow body comprising at least a first sheet metal panel (12) assembled with a second sheet metal panel (14), said first sheet metal panel (12) comprising at least a main portion (16) perpendicular to the second panel (14), an end portion (18) parallel to the second panel (14) and a determined radius of curvature (20) connecting said end portion (18) to the main portion (16), said method comprising at least:

   - one prior positioning step during which the end portion (18) of the first panel (12) is placed on the second panel (14) without clearance; and
   - one laser welding step during which the first panel (12) is laser welded to the second panel (14) while complying with a determined clearance (J) between said first and second panels (12, 14) in order to allow the zinc vapours to be removed, the laser beam being positioned in a zone of the radius of curvature (20) of the first panel (12) corresponding to the determined clearance (J) between the first and second panels (12, 14), a laser head (26) delivering the laser beam (27) being arranged on one side of the two panels (12, 14) in order to carry out so-called "transparency" welding, **characterized in that** during the laser welding step, the laser head (26) is arranged on the side of the concavity of the radius (20) of curvature and is inclined by a determined angle ($\alpha$) at which the beam passes through the centre of the radius of curvature and the normal to the radius of curvature (20) of the first panel (12).

2. Manufacturing method according to the preceding claim, **characterized in that** during the laser welding step, the laser beam (27) is arranged at a determined distance (X) from the junction between the radius of curvature (20) of the first panel (12) and the second panel (14), which is associated with carrying out the welding in a zone of the radius (20) of curvature of the first panel (12) corresponding to the determined clearance (J) between the first and second panels (12, 14).

3. Manufacturing method according to the preceding claim, **characterized in that** it comprises a joint tracking step simultaneous with the laser welding step, during which the position of the weld bead is measured continuously.

4. Manufacturing method according to the preceding claim, **characterized in that** it comprises a step of correcting the positioning of the laser head (26), during which, as a function of the position of the weld bead measured during the joint tracking step, the position of the laser head (26) is slaved in order to adjust the determined distance (X) so as to make it possible to carry out the welding in the zone of the radius of curvature (20) of the first panel (12) corresponding to the determined clearance between the first and second panels (12, 14).

**Fig. 1**

**Fig. 2**

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1005944 A